(19) Europäisches Patentamt
European Patent Office
Office européen des brevets

(11) Veröffentlichungsnummer : **0 035 956**
**B1**

(12) # EUROPÄISCHE PATENTSCHRIFT

(45) Veröffentlichungstag der Patentschrift : **16.02.83**

(51) Int. Cl.³ : **C 07 C147/12**, C 09 B 62/503

(21) Anmeldenummer : **81710007.6**

(22) Anmeldetag : **27.02.81**

(54) **Verfahren zur Herstellung von Sulfatoäthylsulfonyl-Verbindungen.**

(30) Priorität : **11.03.80 DE 3009174**

(43) Veröffentlichungstag der Anmeldung : **16.09.81 Patentblatt 81/37**

(45) Bekanntmachung des Hinweises auf die Patenterteilung : **16.02.83 Patentblatt 83/07**

(84) Benannte Vertragsstaaten : **CH DE FR GB IT LI**

(56) Entgegenhaltungen :
**DE A 1 443 877**
**FR A 2 360 539**
**US A 3 679 649**

(73) Patentinhaber : **HOECHST AKTIENGESELLSCHAFT**
**Postfach 80 03 20**
**D-6230 Frankfurt/Main 80 (DE)**

(72) Erfinder : **Kohlhaas, Folker, Dr.**
**Akazienring 64**
**D-6203 Hochheim am Main (DE)**
Erfinder : **Meininger, Fritz, Dr.**
**Loreleistrasse 7**
**D-6230 Frankfurt am Main 80 (DE)**
Erfinder : **Hoyer, Ernst, Dr.**
**Eptingweg 3**
**D-6230 Frankfurt am Main 80 (DE)**

**EP 0 035 956 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Herstellung von Sulfatoäthylsulfonyl-Verbindungen

Die vorliegende Erfindung liegt auf dem Gebiet der Herstellung von Zwischenprodukten für faserreaktive Verbindungen. Sie betrifft die Herstellung von β-Sulfatoäthylsulfonyl-aminophenolen durch Veresterung von β-Hydroxyäthylsulfonyl-aminophenol-Verbindungen mittels eines Sulfatierungsmittels in einem Lösungsmittel.

Die Veresterung von solchen Verbindungen ist an sich bekannt. Die bisher beschriebenen Methoden erfordern jedoch große Überschüsse an Schwefelsäure; diese überschüssige Schwefelsäure muß entweder bei der Aufarbeitung des Veresterungsproduktes und dessen Isolierung oder bei der Weiterverarbeitung des Veresterungsproduktes, z. B. zu Azofarbstoffen, mit Wasser verdünnt und neutralisiert werden und von dem Veresterungsprodukt oder dem Weiterverarbeitungsprodukt, wie dem Farbstoff, abgetrennt werden. Eine Rückgewinnung der Schwefelsäure ist somit praktisch ausgeschlossen. Die Säure belastet zudem als solche oder in neutralisierter Form als lösliches Sulfat das Abwasser.

Des weiteren haben die bekannten Veresterungsverfahren den Nachteil, daß die Veresterungsprodukte als Lösungen in Schwefelsäure anfallen. Diese Lösungen sind aber für eine Lagerung, beispielsweise für eine später erfolgende Weiterverarbeitung, wenig geeignet, so daß sie sogleich der Weiterverarbeitung, zum Beispiel der Herstellung für Farbstoffe, zugeführt werden müssen.

Ein Veresterungsverfahren obiger Art ist beispielsweise aus der deutschen Patentschrift 953 103 bekannt; so wird in Beispiel 5 ein β-Hydroxyäthylsulfonyl-aminophenol mit der 6-fach molaren Menge an konzentrierter Schwefelsäure umgesetzt. Nach dem Verdünnen der Lösung des Veresterungsproduktes in der Schwefelsäure mit viel Eis und Wasser wird die Aminogruppe der erhaltenen Esterverbindung diazotiert und die Diazoniumverbindung nach Neutralisation dieses großen Schwefelsäureüberschusses mit einer Kupplungskomponente zu einem Azofarbstoff gekuppelt, der nach Überführung in dessen Chromkomplexfarbstoff mit Natriumchlorid ausgesalzen und auf diese Weise von dem hohen Sulfatballast befreit wird. Das bei der anschließenden Filtration in der Mutterlauge verbleibende Natriumsulfat sowie das zum Aussalzen zusätzlich in diese Lösung eingebrachte Natriumchlorid bzw. Kaliumchlorid bedeutet aber für das Abwasser eine erhebliche Salzbelastung.

In ähnlicher Weise erfolgt die Veresterung in den Beispielen 1 bis 4 der deutschen Patentschrift 1 012 010, in den Beispielen 1 bis 4 und 6 der deutschen Patentschrift 1 126 542 und in dem Beispiel 1A der französischen Patentschrift 2 360 539.

Eine Neutralisation der überschüssigen Schwefelsäure mit Calciumcarbonat und Abfiltration des schwer löslichen Calciumsulfats, wie im Beispiel 3 der deutschen Patentschrift 953 103 beschrieben, entlastet zwar das Abwasser, erfordert aber einen zusätzlichen Arbeits- und Materialaufwand; des weiteren hat diese Methode den Nachteil, daß das so anfallende Calciumsulfat als unverwertbarer Industriemüll deponiert werden muß.

Es ist weiterhin aus der deutschen Offenlegungsschrift 1 443 877 von Beispiel 2 bekannt, daß man eine β-Hydroxyäthylsulfonyl-aminophenol-Verbindung mittels Amidosulfonsäure in Pyridin als Lösungsmittel in die entsprechende Schwefelsäurehalbesterverbindung überführen kann. Verwendet wird die Amidosulfonsäure als Sulfatierungsmittel in der 3- bis 4-fach äquimolaren Menge. Dies bedeutet zwar eine deutliche Verminderung des Überschusses an Veresterungsmittel, jedoch muß in der Folge das eingesetzte Pyridin unter vermindertem Druck weitgehend abdestilliert werden. Trotzdem gelangt dabei noch etwa ein Viertel dieses intensiv und unangenehm riechenden, wasserlöslichen Pyridins bei der Weiterverarbeitung des Schwefelsäurehalbesters zu dem Azofarbstoff in die Mutterlauge, aus der es entfernt werden muß, damit es nicht in die Abwässer gelangt.

Es bestand deshalb ein dringender Bedarf nach einem Veresterungsverfahren zur Herstellung solcher β-Sulfatoäthylsulfonyl-aminophenol-Verbindungen, das die Nachteile der Veresterung in Schwefelsäure als Lösungsmittel und auch der Veresterung in Pyridin als Lösungsmittel vermeidet, jedoch die Vorteile des Arbeitens in einem organischen Lösungsmittel und insbesondere vorteilhaft den Einsatz geringer Mengen Veresterungsmittel bietet. Mit der vorliegenden Erfindung wurde solch eine Aufgabe gelöst.

Die vorliegende Erfindung betrifft ein Verfahren zur Herstellung von Verbindungen der allgemeinen Formel (1)

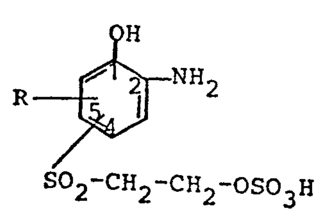

(1)

in welcher R ein Wasserstoffatom, eine niedere Alkylgruppe, wie Äthyl- und bevorzugt Methylgruppe, eine

niedere Alkoxygruppe, wie Äthoxy- und bevorzugt Methoxygruppe, eine Nitrogruppe oder ein Brom- oder Chloratom, hiervon bevorzugt ein Bromatom, bedeutet und die β-Sulfatoäthylsulfonyl-Gruppe in 4- oder 5-Stellung des Benzolkernes gebunden ist, durch Sulfatierung einer Verbindung der allgemeinen Formel (2)

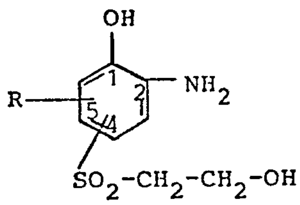

(2)

in welcher R die obengenannte Bedeutung hat und die β-Hydroxyäthylsulfonyl-Gruppe in 4- oder 5-Stellung des Benzolkerns gebunden ist, in einem organischen Lösungsmittel, das dadurch gekennzeichnet ist, daß die Veresterung in N-Methyl-pyrrolidon als Lösungsmittel und mit Schwefeltrioxid oder Chlorsulfonsäure als Sulfatierungsmittel durchgeführt wird.

Die Verwendung von N-Methyl-pyrrolidon als Lösungsmittel hat den großen Vorteil, daß es aus der wäßrigen Phase leicht extrahiert und später leicht destillativ aufgearbeitet werden kann.

Das Schwefeltrioxid kann als Substanz oder in N-Methyl-pyrrolidon gelöst, ebenso aber auch in konzentrierter Schwefelsäure gelöst, beispielsweise als 30 bis 70 gew.-%iges Oleum, in den Reaktionsansatz eingebracht werden.

Die erfindungsgemäße Verfahrensweise, in N-Methylpyrrolidon und mit Schwefeltrioxid oder Chlorsulfonsäure zu arbeiten, hat den Vorteil, daß diese Veresterungsmittel nur in sehr geringen Mengen eingesetzt zu werden brauchen. So kann man diese Sulfatierungsmittel schon in der 2-fach molaren Menge, bezogen auf die Ausgangsverbindung der allgemeinen Formel (2) einsetzen. Ganz besonders vorteilhaft ist die Verwendung des Veresterungsmittels zur Ausgangsverbindung der allgemeinen Formel (2) im Molverhältnis von 1 : 1 bis 1,5 : 1, insbesondere von 1 : 1 bis 1,2 : 1. Auch bei diesen geringen Mengen an Veresterungsmittel werden Ausbeuten von über 97 % d. Th. erhalten.

Das Arbeiten mit den geringen Mengen an Veresterungsmitteln hat weiterhin den Vorteil, daß bei der Aufarbeitung durch Neutralisation nur eine geringe Menge an Neutralisierungsmittel und somit nur eine geringe Menge an Salzen, wie Sulfaten oder Chloriden, die in dem bisher bekannten Verfahren eine starke Belastung für das Abwasser darstellen, auftreten.

Die erfindungsgemäße Verfahrensweise der Veresterung kann sowohl bei niedrigen als auch bei hohen Temperaturen durchgeführt werden. So kann die Umsetzung bei Temperaturen zwischen 0 °C und 120 °C erfolgen ; vorzugsweise arbeitet man bei einer Temperatur zwischen 30 und 80 °C.

Nach Beendigung der Reaktion kann das entstandene homogene Reaktionsgemisch wie folgt aufgearbeitet werden : Man verdünnt es mit Wasser *) und gibt ein zur Neutralisation der Säure übliches säurebindendes Mittel, wie ein basisch reagierendes Alkalimetallsalz, beispielsweise Natriumcarbonat oder Natriumbicarbonat, bis zu einem pH-Wert von 4,5 bis 7 hinzu. Sodann wird diese wäßrige Lösung mit einem hierfür geeigneten organischen Lösungsmittel, wie beispielsweise Methylenchlorid, Chloroform oder 1,2-Dichloräthan, extrahiert.- *) (bspw. mit Eiswasser oder unter Kühlen). Die Verbindungen der allgemeinen Formel (1) liegen sodann in der wäßrigen Phase gelöst als Salze vor ; in diesen wäßrigen Lösungen befinden sich, wie schon erwähnt, bei der Verwendung der geringen Mengen an dem Veresterungsmittel nur geringe Mengen an Elektrolyten, so bei der Verwendung von Schwefeltrioxid nur geringe Mengen (bzw. gar keine) an den Alkalimetallsulfaten oder bei Verwendung von Chlorsulfonsäure nur geringe Mengen an Alkalimetallchloriden, sodaß diese Verbindungen der allgemeinen Formel (2), in Form der Salze, leicht durch Eindampfen der wäßrigen Phase, beispielsweise durch Sprühtrocknung, isoliert werden können. Sie fallen auf diese Weise sehr salzarm oder gar salzfrei an, und das « Abwasser » enthält keine Substanzen.

Die organische Phase, die bei der Extraktion gewonnen wird und die die organischen extrahierenden Lösungsmittel und das N-Methylpyrrolidon enthält, läßt sich anschließend leicht destillativ aufarbeiten, so daß die Lösungsmittel praktisch verlustfrei in den Reaktions- und Aufarbeitungsprozeß zurückgeführt werden können.

Die Verbindungen der allgemeinen Formel (1) stellen bekannte Zwischenprodukte dar, die beispielsweise als Diazokomponenten zur Herstellung von Azofarbstoffen und deren Metallkomplexfarbstoffen eingesetzt werden können. Der Vorteil des erfindungsgemäßen Verfahrens, die Verbindungen der Formel (1) in salzarmer bzw. praktisch salzfreier Form zu erhalten, bedeutet einen erheblichen Vorteil bei der Weiterverarbeitung zu solchen Farbstoffen. Bei der Weiterverarbeitung werden dementsprechend die Endprodukte nicht schon mit erheblichen Mengen an Elektrolyten belastet, so daß aus den Farbstofflösungen nach der Synthese der Azofarbstoffe diese Azofarbstoffe nicht durch Elektrolyte, wie Natriumchlorid oder Kaliumchlorid, ausgesalzen werden müssen, sondern durch Eindampfen der Syntheselösungen, beispielsweise durch Sprühtrocknung, daraus isoliert werden können. Es wird somit ein durch

das Aussalzen durch Elektrolyte stark belastetes Abwasser ausgeschaltet, und das durch die Sprühtrocknung erhaltene Abwasser enthält keine Substanzen. Darüber hinaus ist der Elektrolytgehalt im so erhältlichen Farbstoffpulver verhältnismäßig gering. Es werden auf diese Weise aus den erfindungsgemäß hergestellten Verbindungen der allgemeinen Formel (1) farbstarke Farbstoffpulver in sehr guter Ausbeute bei ausgezeichneter Qualität und Reinheit erhalten, die in ihren Eigenschaften gegenüber den Farbstoffprodukten, die mit entsprechenden Ausgangsverbindungen aus bisher üblichen Veresterungsverfahren gewonnen wurden, Vorteile bieten, wie insbesondere wegen des verbesserten Veresterungsgrades der β-Hydroxyäthylsulfonylgruppe eine höhere Farbstärke, darüberhinaus eine höhere Löslichkeit in Wasser und eine bessere Farbstoffausbeute. Bei genügend größer Löslichkeit dieser Farbstoffe, die unter Einsatz der erfindungsgemäß hergestellten Verbindungen der Formel (1) synthetisiert wurden, können die aus dieser Synthese anfallenden Farbstofflösungen auch direkt oder nach Einengen auf ein geringeres Volumen für färberische Zwecke eingesetzt werden. Auch dieser Vorteil ist eine Folge des erfindungsgemäßen Verfahrens zur Herstellung der Verbindungen der allgemeinen Formel (1).

Die nachstehenden Beispiele dienen zur Erläuterung der Erfindung. Die Teile sind Gewichtsteile, die Prozentangaben beziehen sich auf Gewichtsprozente, sofern nicht anders vermerkt. Gewichsteile verhalten sich zu Volumenteilen wie Kilogramm zu Liter.

Beispiel 1

Zu einer Lösung von 217 Teilen 2-Amino-1-hydroxy-4-(β-hydroxyäthylsulfonyl)-benzol in 600 Volumenteilen N-Methyl-pyrrolidon werden bei einer Temperatur von 45 °C 128 Teile Chlorsulfonsäure innerhalb von 30 bis 40 Minuten langsam zugegeben. Nach dem Ende der Reaktion (Reaktionszeit etwa 60 Minuten) wird der Ansatz mit 1 100 Teilen Eiswasser verdünnt und mit 185 Teilen Natriumbicarbonat neutralisiert. Die Lösung wird sodann mit 1 100 Teilen Methylenchlorid extrahiert. Nach Trennung der wäßrigen und organischen Phasen erhält man etwa 1 400 Volumenteile einer wäßrigen Lösung, die 310 Teile des Natriumsalzes der Verbindung der Formel

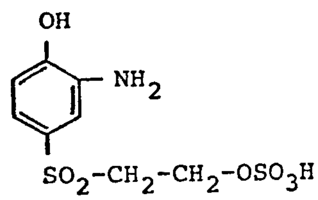

enthält ; diese Verbindung kann durch Eindampfen der wäßrigen Lösung, wie beispielsweise durch Sprühtrocknung, isoliert werden. Der Elektrolytgehalt beträgt 20 %, die Ausbeute 97 % d. Th. mit einem Veresterungsgrad von 95,5 %.

Beispiel 2

42 Teile Schwefeltrioxid werden zu 300 Volumenteilen N-Methylpyrrolidon getropft. Unter Rühren werden sodann bei einer Temperatur zwischen 40 und 50 °C 108,5 Teile 2-Amino-1-hydroxy-4-(β-hydroxyäthylsulfonyl)-benzol innerhalb von etwa 30 Minuten eingetragen. Nach Beendigung der Reaktion (Reaktionszeit etwa 60 Minuten) wird das Reaktionsgemisch gemäß den Angaben des Beispieles 1 ausgearbeitet. Die erhaltene wäßrige Lösung wird eingedampft. Es werden 160 Teile eines Pulvers erhalten, das neben 4 Teilen Natriumsulfat 155,5 Tl. des Natriumsalzes der Schwefelsäurehalbesterverbindung des 2-Amino-1-hydroxy-4-(β-hydroxyäthylsulfonyl)-benzols (entsprechend der in Beispiel 1 angegebenen Formel) enthält.

Beispiel 3

Man verfährt gemäß der im Beispiel 2 beschriebenen Verfahrensweise, verwendet jedoch anstelle der 42 Teile Schwefeltrioxid 64 Teile 65 %iges Oleum als Sulfatierungsmittel. Nach Aufarbeitung des Reaktionsgemisches erhält man 193 Teile eines Pulvers, das 81 % des Natriumsalzes der in Beispiel 1 formelmäßig angegebenen Schwefelsäurehalbesterverbindung und 19 % Elektrolyt (Natriumchlorid) enthält. Der Veresterungsgrad beträgt 99,7 %, die Ausbeute 98,5 % d. Th.

Beispiele 4 bis 9

Verfährt man in erfindungsgemäßer Weise zur Herstellung der Esterverbindungen der allgemeinen Formel (1), beispielsweise analog den Verfahrensvarianten, die in den Beispielen 1, 2 oder 3 dort für eine Verbindung beschrieben sind, und geht hierbei von anderen Ausgangsverbindungen entsprechend der allgemeinen Formel (2) aus, wie sie beispielsweise in den nachfolgenden Tabellenbeispielen aufgeführt sind, so erhält man ebenfalls entsprechende Veresterungsprodukte mit einem Veresterungsgrad von 98-100 % und Ausbeuten von 95-100 % d. Th.

| | Verbindungen der allgemeinen Formel (1) bzw. der allgemeinen Formel (2) | |
|---|---|---|
| Bsp. | R | β-Hydroxy- bzw. β-Sulfatoäthylsulfonyl in ....-Stellung |
| 4 | 4-Methyl | 5- |
| 5 | 4-Methoxy | 5- |
| 6 | Wasserstoff | 5- |
| 7 | 6-Brom | 4- |
| 8 | 5-Methoxy | 4- |
| 9 | 6-Nitro | 4- |

Beispiel 10 (Anwendung)

288 Volumenteile der in Beispiel 1 nach Aufarbeitung erhaltenen wäßrigen Lösung mit dem Natriumsalz des 2-Amino-1-hydroxy-4-(β-sulfatoäthylsulfonyl)-benzols werden mit 100 Teilen Eis und sodann mit 60 Teilen einer 31 %igen Salzsäure versetzt und durch Zugabe von 40,1 Volumenteilen einer wäßrigen 5n-Natriumnitritlösung diazotiert. Ein geringer Nitritüberschuß wird danach mit wenig Amidosulfonsäure zerstört. Zur Lösung dieses so hergestellten Diazoniumsalzes werden 51 Teile 1-(4'-Sulfophenyl)-3-methyl-pyrazolon (5) in pulveriger Form als Kupplungskomponente unter Rühren hinzugegeben. Mit etwa 17 Teilen wasserfreiem Natriumcarbonat wird ein pH-Wert von 6-6,5 eingestellt und gehalten, bis die Kupplung beendet ist. Anschließend werden 50 Teile kristallisiertes Kupfersulfat zugesetzt und mit 50 Teilen kristallisiertem Natriumacetat und etwa 14 Teilen wasserfreiem Natriumcarbonat ein pH-Wert von 4,5-5,0 eingestellt. Nach einer Reaktionszeit von etwa 3 Stunden bei etwa 20 °C wird die Reaktionslösung geklärt und sprühgetrocknet oder bei 50 bis 60 °C eingedampft. Man erhält, erforderlichenfalls nach Mahlung, 191 Teile eines gelbbraunen Farbstoffpulvers, das 70 %ig an dem Farbstoff der Formel

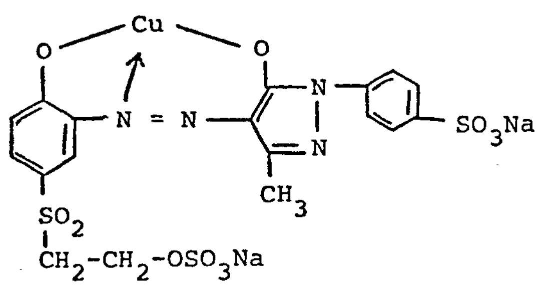

ist. Dieser Farbstoff liefert in Gegenwart alkalisch wirkender Mittel auf Cellulosefasermaterial, wie Baumwolle, in den für faserreaktive Farbstoffe bekannten, üblichen Färbeweisen farbstarke, klare, gelbe Färbungen und Drucke von sehr guten Licht- und Naßechtheiten.

Beispiel 11 (Anwendung)

65,4 Teile des gemäß Beispiel 2 hergestellten Natriumsalzes des Schwefelsäurehalbesters werden in einer Mischung aus 300 Teilen Wasser und 100 Teilen Eis gelöst und, wie in Beispiel 10 beschrieben, diazotiert (besonders vorteilhaft kann man anstelle der hier hergestellten wäßrigen Lösung dieses Natriumsalzes direkt von einer entsprechenden Menge der wäßrigen Lösung des nach der Aufarbeitung der Veresterungsreaktion erhältichen wäßrigen Phase ausgehen, die dieses Natriumsalz bereits gelöst enthält). Die Lösung dieses Diazoniumsalzes wird mit 72,2 Teilen 1-Acetylamino-8-naphthol-3,6-disulfonsäure bei einem pH-Wert von 6-7 gekuppelt. Zu der Lösung der so hergestellten Azoverbindung werden 50 Teile Chromalaun zugegeben und mit kristallisiertem Natriumacetat ein pH-Wert von 5,3 bis 5,7 eingestellt. Anschließend wird die Reaktionsmischung etwa 10 Stunden lang unter Rückfluß gekocht, bis chromatographisch kein metallfreier Farbstoff in der Reaktionsmischung mehr festgestellt werden kann. Die Lösung des entstandenen 1 : 2-Chromkomplex-Farbstoffes wird unter Zusatz von 10 Teilen Kieselgur geklärt und sodann sprühgetrocknet. Es wird ein blauschwarzes Farbstoffpulver erhalten, das 67 %ig an dem 1 : 2-Chromkomplexfarbstoff der Formel

(Siehe das Schema, Seite 6)

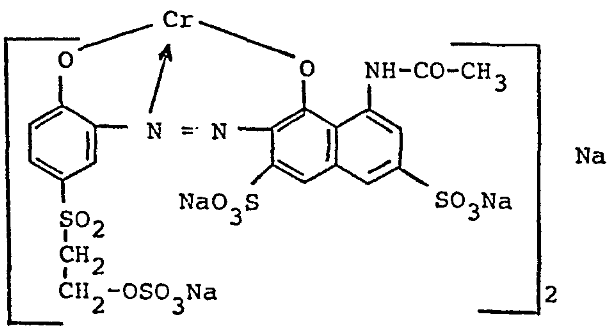

ist. Dieser Farbstoff liefert gemäß den für faserreaktive Farbstoffe üblichen Färbe- und Druckverfahren auf Cellulosefasermaterialien kräftige, marineblaue Drucke und Färbungen von sehr guten Licht- und Naßechtheiten.

In üblicher und bekannter Weise, beispielsweise wie in den Beispielen 10 und 11 beschrieben, lassen sich andere Azofarbstoffe und deren Kupfer-, Chrom- und Kobaltkomplexfarbstoffe herstellen, wenn man von den erfindungsgemäß hergestellten Verbindungen der allgemeinen Formel (1), wie sie beispielsweise in den Beispielen 1 bis 9 beschrieben sind, als Diazokomponenten ausgeht. Die mit diesen Ausgangsverbindungen erhältlichen Farbstoffprodukte zeigen ebenso hohe Farbstärken und liefern Färbungen und Drucke auf Baumwolle oder Wolle in klaren Nuancen und guten Echtheiten.

**Ansprüche**

1. Verfahren zur Herstellung von Verbindungen der allgemeinen Formel (1)

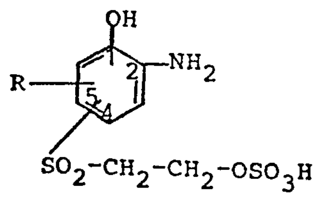

(1)

in welcher R ein Wasserstoffatom, eine niedere Alkylgruppe, eine niedere Alkoxygruppe, eine Nitrogruppe, ein Chlor- oder Bromatom bedeutet und die β-Sulfatoäthylsulfonyl-Gruppe in 4- oder 5-Stellung des Benzolkernes gebunden ist, durch Sulfatierung einer Verbindung der allgemeinen Formel (2)

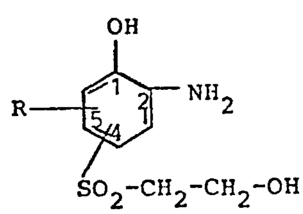

(2)

in welcher R die obengenannte Bedeutung hat und die β-Hydroxyäthylsulfonylgruppe in 4- oder 5-Stellung des Benzolkernes gebunden ist, in einem organischen Lösungsmittel, dadurch gekennzeichnet, daß die Veresterung in N-Methylpyrrolidon als Lösungsmittel und mit Schwefeltrioxid oder Chlorsulfonsäure als Sulfatierungsmittel durchgeführt wird.

2. Verfahren nach Anspruch 1, dadurch gekennzeichnet, daß das Sulfatierungsmittel in der 1- bis 2-fach molaren Menge, bezogen auf die Ausgangsverbindung der allgemeinen Formel (2), eingesetzt wird.

3. Verfahren nach Anspruch 1 oder 2, dadurch gekennzeichnet, daß man die Sulfatierung bei einer Temperatur zwischen 30 und 80 °C durchführt.

4. Verwendung der nach Anspruch 1, 2 oder 3 hergestellten Verbindungen zur Synthese von Azofarbstoffen oder deren Metallkomplexe.

**Claims**

1. Process for the preparation of compounds of the general formula (1)

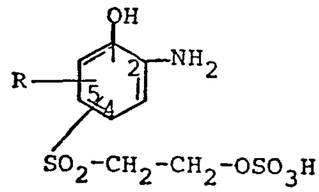

(1)

in which R is a hydrogen atom, a lower alkyl group, a lower alkoxy group, a nitro group, a chlorine or bromine atom, and in which the β-sulfatoethylsulfonyl group is bonded in the 4- or 5-position of the benzene nucleus, by sulfatation of a compound of the general formula (2)

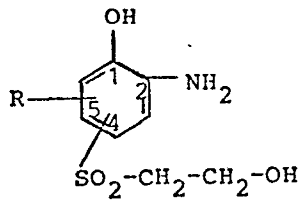

(2)

in which R has the above-mentioned meaning and the β-hydroxyethylsulfonyl group is bonded in the 4- or 5-position of the benzene nucleus, in an organic solvent, the process being characterized by that the esterification is carried out in N-methyl-pyrrolidone as the solvent and by means of sulfurtrioxide or chlorosulfonic acid as the sulfatation agent.

2. Process according to claim 1, characterized by that the sulfatation agent is used in the 1- to 2-fold molar amount, relative to the starting compound of the general formula (2).

3. Process according to claim 1 or 2, characterized by that the sulfatation is carried out at a temperature between 30 and 80 °C.

4. Use of the compounds prepared according to claim 1, 2 or 3, for the synthesis of azo dyestuffs or the metalcomplexes thereof.

**Revendications**

1. Procédé pour préparer des composés répondant à la formule générale (1)

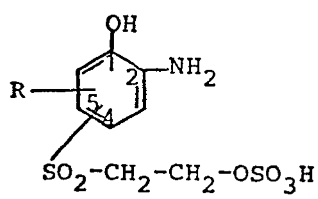

(1)

dans laquelle R représente un atome d'hydrogène, un radical alkyle inférieur, un radical alcoxy inférieur, un groupe nitro ou un atome de chlore ou de brome et dans laquelle le radical β-sulfato-éthylsulfonyle occupe la position 4 ou la position 5 du noyau benzénique, par sulfatation d'un composé répondant à la formule générale (2)

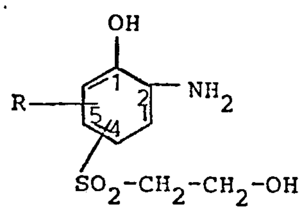

(2)

dans laquelle R a la signification indiquée ci-dessus et dans laquelle le radical β-hydroxyéthylsulfonyle occupe la position 4 ou la position 5 du noyau benzénique, dans un solvant organique, procédé caractérisé en ce qu'on effectue l'estérification dans de la N-méthyl-pyrrolidone comme solvant et avec de l'anhydride sulfurique ou de l'acide chloro-sulfonique comme agent de sulfatation.

2. Procédé selon la revendication 1, caractérisé en ce que l'agent de sulfatation est mis en jeu en une quantité représentant de 1 à 2 fois la quantité molaire, par rapport au corps de départ de formule générale (2).

3. Procédé selon l'une des revendications 1 et 2, caractérisé en ce qu'on effectue la sulfatation à une température comprise entre 30 et 80 °C.

4. Application des composés préparés selon l'une quelconque des revendications 1 à 3 pour la synthèse de colorants azoïques ou de leurs complexes métallisés.